(19) Europäisches Patentamt
European Patent Office
Office européen des brevets

(11) **EP 4 576 621 A1**

(12) **EUROPEAN PATENT APPLICATION**

(43) Date of publication:
**25.06.2025 Bulletin 2025/26**

(21) Application number: **23218083.6**

(22) Date of filing: **19.12.2023**

(51) International Patent Classification (IPC):
**H04J 11/00** (2006.01)     **H04J 13/00** (2011.01)

(52) Cooperative Patent Classification (CPC):
**H04J 11/0076; H04J 11/0086; H04J 13/0025; H04J 11/0073**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(71) Applicant: **Nokia Technologies Oy**
**02610 Espoo (FI)**

(72) Inventors:
• **HAKOLA, Sami-Jukka**
  **Kempele (FI)**
• **HOOLI, Kari Juhani**
  **Oulu (FI)**
• **TERVO, Oskari**
  **Oulu (FI)**

(74) Representative: **Nokia EPO representatives**
**Nokia Technologies Oy**
**Karakaari 7**
**02610 Espoo (FI)**

(54)     **SYNCHRONIZATION**

(57)     According to an example aspect of the present invention, there is provided an apparatus configured to detect, over an air interface, synchronization signals from a base node of a network, the synchronization signals comprising at least a primary synchronization signal, PSS, a first secondary synchronization signal, SSS, part and a second SSS part, wherein the apparatus is further caused to detect the first SSS part based at least in part on a first mapping function having at least a first parameter used to generate the PSS as input, and detect the second SSS part based at least in part on a second mapping function having at least a second parameter used to generate the first SSS part as input.

FIGURE 1

**Description**

FIELD

The present disclosure relates to synchronization procedures in wireless communication networks.

BACKGROUND

In cellular communication networks, user equipments, UEs, roam in a coverage area of the network and attach themselves to cells of the network.

To obtain dependable communication with a cell, a UE needs to synchronize itself with the cell, for example in both time and frequency domains, whereby symbol timing and frequency synchronization are obtained, so, for example, that orthogonal frequency domain multiplexing, OFDM, based communication may be conducted between the UE and the cell.

Synchronization signals may be transmitted by the cell, and detected by the UE, to achieve synchronization.

SUMMARY

According to some aspects, there is provided the subject-matter of the independent claims. Some embodiments are defined in the dependent claims. The scope of protection sought for various embodiments of the invention is set out by the independent claims. The embodiments, examples and features, if any, described in this specification that do not fall under the scope of the independent claims are to be interpreted as examples useful for understanding various embodiments of the invention.

According to a first aspect of the present disclosure, there is provided an apparatus comprising at least one processing core and at least one memory storing instructions that, when executed by the at least one processing core, cause the apparatus at least to detect, over an air interface, synchronization signals from a base node of a network, the synchronization signals comprising at least a primary synchronization signal, PSS, a first secondary synchronization signal, SSS, part and a second SSS part, wherein the apparatus is further caused to detect the first SSS part based at least in part on a first mapping function having at least a first parameter used to generate the PSS as input, and detect the second SSS part based at least in part on a second mapping function having at least a second parameter used to generate the first SSS part as input.

According to a second aspect of the present disclosure, there is provided an apparatus comprising at least one processing core and at least one memory storing instructions that, when executed by the at least one processing core, cause the apparatus at least to transmit, over an air interface, synchronization signals, the synchronization signals comprising at least a primary synchronization signal, PSS, a secondary synchronization signal, SSS, first part and an SSS second part, wherein the apparatus is further caused to generate the first SSS part based at least in part on a first mapping function having at least a first parameter used to generate the PSS as input, and generate the second SSS part based at least in part on a second mapping function having at least a second parameter used to generate the first SSS part as input.

According to a third aspect of the present disclosure, there is provided a method comprising detecting, over an air interface, synchronization signals from a base node of a network, the synchronization signals comprising at least a primary synchronization signal, PSS, a first secondary synchronization signal, SSS, part and a second SSS part, wherein the method further comprises detecting the first SSS part based at least in part on a first mapping function having at least a first parameter used to generate the PSS as input, and detecting the second SSS part based at least in part on a second mapping function having at least a second parameter used to generate the first SSS part as input.

According to a fourth aspect of the present disclosure, there is provided a method comprising transmitting, over an air interface, synchronization signals, the synchronization signals comprising at least a primary synchronization signal, PSS, a secondary synchronization signal, SSS, first part and an SSS second part, wherein the method further comprises generating the first SSS part based at least in part on a first mapping function having at least a first parameter used to generate the PSS as input, and generating the second SSS part based at least in part on a second mapping function having at least a second parameter used to generate the first SSS part as input.

According to a fifth aspect of the present disclosure, there is provided an apparatus comprising means for detecting, over an air interface, synchronization signals from a base node of a network, the synchronization signals comprising at least a primary synchronization signal, PSS, a first secondary synchronization signal, SSS, part and a second SSS part, wherein the apparatus further comprises means for detecting the first SSS part based at least in part on a first mapping function having at least a first parameter used to generate the PSS as input, and means for detecting the second SSS part based at least in part on a second mapping function having at least a second parameter used to generate the first SSS part as input.

According to a sixth aspect of the present disclosure, there is provided an apparatus comprising means for transmitting, over an air interface, synchronization signals, the synchronization signals comprising at least a primary synchronization signal, PSS, a secondary synchronization signal, SSS, first part and an SSS second part, wherein the apparatus further comprises means for generating the first SSS part based at least in part on a first mapping function having at least a first parameter used to generate the PSS as input, and means for generating the second SSS part based at least in part on a second mapping function having at least a second parameter used to generate the first SSS part as input.

According to a seventh aspect of the present disclosure, there is provided a non-transitory computer readable medium having stored thereon a set of computer readable instructions that, when executed by at least one processor, cause an apparatus to at least detect, over an air interface, synchronization signals from a base node of a network, the synchronization signals comprising at least a primary synchronization signal, PSS, a first secondary synchronization signal, SSS, part and a second SSS part, wherein the computer readable instructions further cause the apparatus to detect the first SSS part based at least in part on a first mapping function having at least a first parameter used to generate the PSS as input, and detect the second SSS part based at least in part on a second mapping function having at least a second parameter used to generate the first SSS part as input.

According to an eighth aspect of the present disclosure, there is provided a non-transitory computer readable medium having stored thereon a set of computer readable instructions that, when executed by at least one processor, cause an apparatus to at least transmit, over an air interface, synchronization signals, the synchronization signals comprising at least a primary synchronization signal, PSS, a secondary synchronization signal, SSS, first part and an SSS second part, wherein the computer readable instructions further cause the apparatus to generate the first SSS part based at least in part on a first mapping function having at least a first parameter used to generate the PSS as input, and generate the second SSS part based at least in part on a second mapping function having at least a second parameter used to generate the first SSS part as input.

BRIEF DESCRIPTION OF THE DRAWINGS

FIGURE 1 illustrates an example system in accordance with at least some embodiments of the present invention;

FIGURE 2A illustrates shift values m0 and m1;

FIGURE 2B illustrates shift value examples;

FIGURE 3 illustrates an example apparatus capable of supporting at least some embodiments of the present invention;

FIGURE 4 illustrates signalling in accordance with at least some embodiments of the present invention, and

FIGUREs 5 - 6 are flow graphs of methods in accordance with at least some embodiments of the present invention.

EMBODIMENTS

Synchronization procedures are herein described, which enable performing synchronization using synchronization signals with low peak to average power ratio, PAPR. In detail, the synchronization signals are provided in the form of low-PAPR sequences, which may comprise m-sequences, for example. Dependencies are defined between sequences comprised in the synchronization signals, to increase dependability of a detection process of the sequences, such that a user equipment may have greater confidence that the sequences it receives are from a same cell. The dependencies may be formulated as mapping functions defining acceptable sets of sequences, as will be described herein below in more detail.

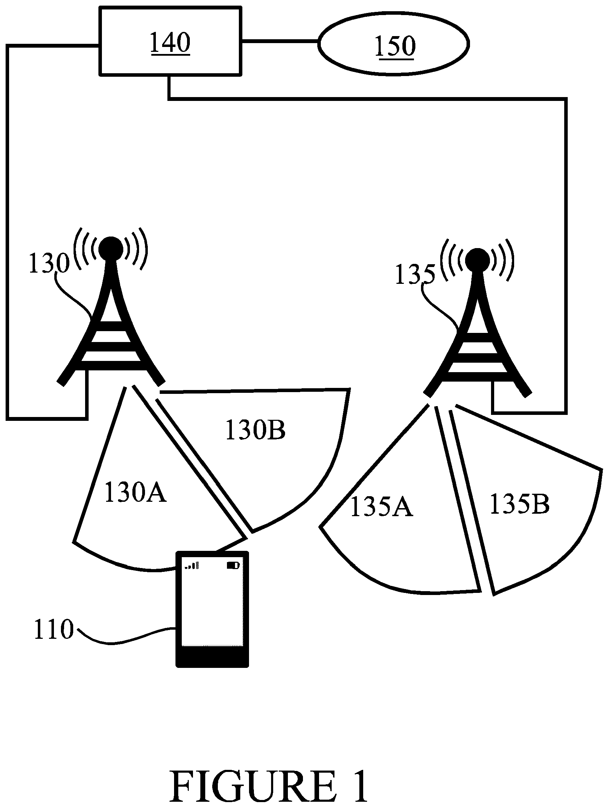

FIGURE 1 illustrates an example system in accordance with at least some embodiments of the present invention. This system includes base stations 130, 135 in communication with UEs, such as UE 110. A radio link connects base station 130 with UE 110. The radio link may be bidirectional, comprising an uplink, UL, to convey information from UE 110 toward base station 130, and a downlink, DL, to convey information from the base station 130 toward UE 110. A cellular communication system may comprise hundreds or thousands of base stations, of which only two are illustrated in FIGURE 1 for the sake of clarity of the illustration. The base stations may be distributed in that they comprise a centralized unit, CU, and one or more distributed unit, DU. A base station is an example of a base node.

Base station 130 is further coupled communicatively with core network node 140, which may comprise, for example, a mobility management entity, MME, or access and mobility management function, AMF. The core network node 140 may be coupled with further core network nodes, and with a network 150, which may comprise the Internet or a corporate network, for example. The system may communicate with further networks via network 150. Examples of the further core network nodes, which are not illustrated in FIGURE 1 for the sake of clarity, include gateways and subscriber information repositories. Core network nodes may be virtualized in the sense that they may run as software modules on computing substrates, such that more than one virtualized network node may run on a same computing substrate. The network may be configured to function in accordance with a suitable cellular standard such as long term evolution, LTE, fifth generation, 5G, which is also known as New Radio, NR, or sixth generation, 6G standards as defined by the the 3rd generation partnership project, 3GPP. To obtain interoperation, UEs attaching to the network are configured to support a same standard as the network.

Base station 130 controls, in the example of FIGURE 1 cells 130A and 130B, of which UE 110 is in the situation illustrated in FIGURE 1 attached with cell 130A, and base station 135 controls, in the example of FIGURE 1, cells 135A and 135B. The number of cells, or beams, may be in excess of what is illustrated in FIGURE 1. It is also possible that a base station has a single cell or beam. While illustrated as sector-shaped, cells of a same base station may be omnidirectional and operate on different frequencies, for example. A mobility event may comprise a switch from one beam to another beam of the same cell, or a switch from one cell to another cell. To support mobility procedures, UEs, including UE 110, are configured to conduct mobility measurements to measure signal strengths of adjacent beams and/or cells, and report results of these measurements to the network, which may then take a decision concerning a mobility event, such as a beam change or a cell switch.

Cells, such as cells 130A, 130B, 135A and 135B are configured to transmit synchronization signals, such as primary synchronization signal, PSS, and secondary synchronization signal, SSS, to enable synchronization of UEs to the frame structure of the cells, for example in connection with initial attach or mobility procedures.

In 5G, for example, the cell provides a synchronization signal block, SSB, which comprises a PSS, SSS and physical broadcast channel, PBCH. The SSB may be provided, in 5G, using a unitary resource block of four OFDM symbols in the time domain and 20 physical resource blocks, PRBs, in the frequency domain, wherein each PRB in 5G amounts to twelve subcarriers. In 5G, the PSS is an m-sequence and the SSS is a gold sequence, which is obtained from two m-sequences of equal length using an exclusive-OR operation. The PSS and SSS of 5G are transmitted using binary phase-shift keying, BPSK, while the PBCH of 5G is transmitted using quadrature phase shift keying, QPSK. The PSS is used for acquiring time and frequency synchronization with the cell, while the SSS is used for more precise frequency synchronization, and the PBCH is used in frame and half-frame synchronization and to convey a demodulation reference signal, DMRS, used for slot timing. The PBCH may also be used to convey configuration information the UE may use in accessing the cell, such as an antenna configuration, for example. Further, a physical cell identifier, PCI, is encoded into the PSS and SSS. In detail, the PCI, $N_{ID}^{cell}$, may be defined, for example, by $N_{ID}^{cell} = 3N_{ID}^{(1)} + N_{ID}^{(2)}$, where $N_{ID}^{(1)} \in \{0, 1, ..., 335\}$ and $N_{ID}^{(2)} \in \{0, 1, 2\}$. PSS is an m-sequence which depends on $N_{ID}^{(2)}$ and hence there are three possible m-sequences that may be used as the PSS in 5G.

Energy efficiency in cellular communication networks is of relevance in terms of both power costs and overall energy usage, as industrial use of energy also has effects on the environment. Sixth generation, 6G, networks will need to be more energy-efficient than prior systems, which may be accomplished, for example, by dynamically switching components and nodes off or to low-energy states, as well as scaling down network capacity when the demand is lower.

When transmitting a signal from a cell or a UE, a power amplifier, PA, is used. When a PA is driven beyond its normal, linear operating range, the PA will begin to generate spurious signals, the generation of which amounts to energy consumed in generating noise, and which also expands the bandwidth *de facto* affected by the transmission, which may cause interference onto adjacent frequency channels. This may be mitigated by limiting the average PA output power to avoid driving the PA beyond the linear range. When this approach is used, the peak power should not exceed the PA's 1 dB output compression power to reduce spectral re-growth and enhance bit-error-rate, BER, performance. The error vector magnitude, EVM, a metric of modulation quality at the transmitter, will consequently be small when a sufficient back-off is used. The amount of back-off to be chosen for a modulated signal not only depends on the PAPR of the used waveform but also on the probability of PAPR peaks occurring. Backing off the power to avoid PA compression will result in lower power efficiency and thus reduced coverage for the transmitted signal. In 6G, higher frequencies beyond the sub-6 GHz frequency range 1, FR1, are foreseen to become more important, which further increases the relevance of DL energy efficiency and coverage.

The following table shows the 98th-percentile of average sample-based PAPR values for the PSS, SSS, and also for SSB symbols 1, 2 and 3 having PBCH, PBCH DMRS and SSS in 5G:

|  | PSS | SSS | SSB symbols 1, 2 and 3 |
|---|---|---|---|
| 98% PAPR [dB] | 4.5 | 7.4 | 7.4 |

As may be seen from the table, the PSS is associated with lower PAPR than the SSS, and also than the SSS multiplexed with the PBCH. Even though the PSS is the first signal the UE searching for, the SSS, which is provided within the third symbol of the 5G SSB, is the main 5G signal to be used for primary SSB-based beam measurements as well as for mobility measurements both in the idle and connected modes. SSS transmission involves higher PAPR with or without being multiplexed with PBCH PRBs in frequency domain and high transmission power back-off is needed, which reduces reception quality of the SSS signal, or equivalently coverage. Especially symbol-based PAPR shows that SSS multiplexing with PBCH further increases the PAPR.

Synchronization mechanisms are herein described, which enhance synchronization signal structure to make the synchronization signals more energy-efficient to transmit, which simultaneously also improves downlink coverage. In other words, these synchronization mechanisms provide a low PAPR synchronization signal structure and transmission, for example for 6G based systems. The lowered PAPR may translate to an improved synchronization signal coverage, improved energy efficiency, and/or reduced synchronization signal overhead in beam-based cells. Downlink design in 6G for the already defined FR1 band may be OFDM-based in order to enable, for example, dynamic spectrum sharing between 5G and 6G systems. For the higher bands, such as for a 7 - 15 GHz band for 6G, a separate energy efficient structure could be considered as there are no legacy systems to coexist with.

Based on performance studies, it has been discovered that the SSB channel needs coverage enhancement in certain cases, for example in an urban 4 GHz time-division duplex, TDD scenario, or an urban 28 GHz TDD non-line-of-sight, NLOS outdoor-to-indoor scenario. Therefore, it may be concluded that the SSB channel in general would benefit from a coverage enhancement solution not only in FR1 and the over-6 GHz FR2, but also for a 6G-relevant 7 - 15 GHz band. Further motivation for improving the SSB coverage is that it allows to widen the transmit beams used to convey the synchronization signals. This will reduce the number of beams needed, and will reduce the synchronization signal overhead accordingly.

In a similar way, even if the coverage would not need to be increased, the reduced PAPR waveform is a way to use the PA(s) in a more efficient way, and therefore reduce the amount of dissipated power. Thus energy savings can be obtained by using lower PAPR signals. From the network perspective, SSB is a block of signals that is periodically transmitted, thus reducing its PAPR would conserve energy in the network. In order to enhance PAPR characteristics of the synchronization signals, one way is to partition the SSS into two separately transmitted m-sequences, namely a first SSS part and a second SSS part, instead, of using a gold sequence SSS build of the two m-sequences using exclusive-or, as described above. Instead of m-sequences, other low-PAPR sequences may be used, depending on the embodiment.

An SSS sequence may be constructed from two m-sequences, for example, as follows:

$$d_{SSS}(n) = \left[1 - 2x_0\left((n+m_0)\bmod 127\right)\right]\left[1 - 2x_1\left((n+m_1)\bmod 127\right)\right]$$

$$m_0 = 15\left\lfloor\frac{N_{ID}^{(1)}}{112}\right\rfloor + 5N_{ID}^{(2)}$$

$$m_1 = N_{ID}^{(1)}\bmod 112$$

$$0 \le n < 127$$

where

$$x_0(i+7) = \left(x_0(i+4)+x_0(i)\right)\bmod 2$$

$$x_1(i+7) = \left(x_1(i+1)+x_1(i)\right)\bmod 2 \quad,$$

and

$$\begin{bmatrix} x_0(6) & x_0(5) & x_0(4) & x_0(3) & x_0(2) & x_0(1) & x_0(0) \end{bmatrix} = \begin{bmatrix} 0 & 0 & 0 & 0 & 0 & 0 & 1 \end{bmatrix}$$

$$\begin{bmatrix} x_1(6) & x_1(5) & x_1(4) & x_1(3) & x_1(2) & x_1(1) & x_1(0) \end{bmatrix} = \begin{bmatrix} 0 & 0 & 0 & 0 & 0 & 0 & 1 \end{bmatrix}.$$

The definitions above are from 3GPP technical standard, TS, TS 38.211 sections 7.4.2.2 and 7.4.2.3. The shift of the SSS m-sequences are selected depending on PCI component $N_{ID}^{(1)}$ and/or $N_{ID}^{(2)}$. The m-sequence shift for PSS is selected depending on $N_{ID}^{(2)} \in \{0,1,2\}$. There are three shift values that may be used for $N_{ID}^{(2)}$.

The m-sequence shift m0 for the first SSS part is selected depending on $N_{ID}^{(1)} \in$ {0,1, ... ,335} and on $N_{ID}^{(2)} \in \{0,1,2\}$. There are nine shift values that are used, and there is a dependence between PSS and first SSS part shift values.

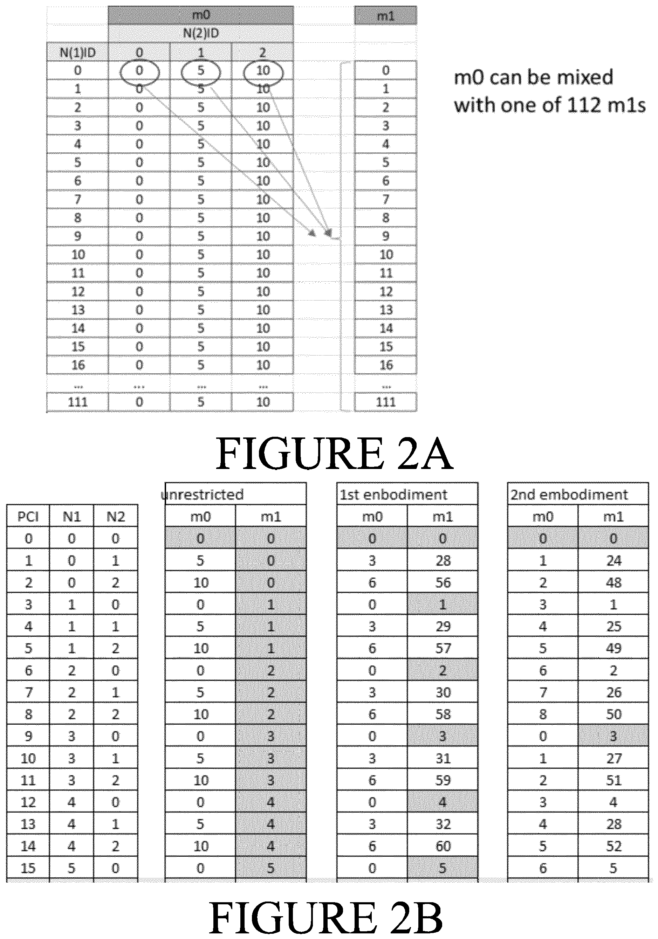

The m-sequence shift m1 for the second SSS part is selected depending on $N_{ID}^{(1)} \in \{0,1, ... ,335\}$. There are 112 shift values that are used. The shift values m0 and m1 are illustrated in FIGURE 2A. It can be seen from FIGURE 2A that the second m-sequence (with m1 shift), is not dependent on the first m-sequence (with m0 shift) and thus first m-sequence can be combined with one of 112 second m-sequences. Correspondingly when m-sequences of the SSS are used as first and second SSS parts, respectively, a problem would arise where UEs may combine a first SSS part from one cell with a second SSS part from another cell, since to the UE all sequences would appear to be compatible with each other. Such an error would have a negative impact on cell search performance, for example in the latency domain.

To alleviate this concern, in synchronization methods disclosed herein, the second SSS part is made to depend on the first SSS part, or both the first SSS part and the PSS. In particular, in a first embodiment, the second SSS part and the first SSS part depend on the PSS in a manner that creates dependency between the second SSS part and the first SSS part. In a second embodiment the second SSS part depends on both the PSS and the first SSS part in a manner that creates dependency between the second SSS part and the first SSS part via plural parameters that are used to determine the second SSS part and the first SSS part. Thus the UE is enabled to, in many cases, ignore a second SSS part received from an incorrect cell as not complying with this dependency, or these dependencies. The dependencies may be expressed as mapping functions defining acceptable shift values for the first and/or second SSS part(s). The mapping functions take parameters used to generate the PSS and/or the first SSS part as input. These parameters may be the PCI components $N_{ID}^{(1)}$ and/or $N_{ID}^{(2)}$, for example. The mapping functions may further depend on properly chosen constants a, b, c, d and/or e as discussed herein below.

In an alternative solution, a different m-sequence is used with each separate $N_{ID}^{(2)}$ value. For detection of a shift m1 of the second SSS part, the UE selects the used sequence based on the detected PSS and $N_{ID}^{(2)}$ value. In a yet further alternative, a long SSS sequence, such as two times the length of subcarriers available in one symbol for the SSS, may be transmitted so that, for example, the first half of the sequence is transmitted as the first SSS part and the second half of the sequence is transmitted as the second SSS part. This is thus an alternative to the gold sequence obtained by the exclusive-or operation. Such a long SSS sequence would have a low PAPR due to the m-sequences themselves having low PAPR.

Further, in one variant solution that can be used for any of the above solutions, the overall SSS sequence, including the first and second SSS parts, may also be dependent on the location in the slot, or on the relative location in the burst, of the SSS transmissions. For example, there may be defined two time instances in the slot where the first and/or second SSS part(s) transmitted, a first and second time instance. As an example of this, for instance, the first SSS part may be the same sequence in both locations in the slot while the second SSS part may be different, dependent on whether the first SSS part location is the former or the latter location in the slot of two possible first SSS part locations in the slot. This also enables the UE to reject a second SSS part not complying with the dependency on the location in the slot of the first SSS part.

Concerning the first embodiment, the dependence between the SSS sequences can be created by modifying the 5G m-sequence shift selection as follows. Second SSS part shift m1 and first SSS part shift m0 are made dependent on each other based on a mapping function. This is done by adding second SSS part shift m1 dependence on PCI component $N_{\text{ID}}^{(2)}$, hence, creating dependence between second SSS part and first SSS part, as well as PSS.

For example, the dependence may be expressed as $m_1 = N_{ID}^{(1)} mod\ a + b * N_{ID}^{(2)}$. As more $N_{ID}^{(1)}$ values than earlier will produce the same m1 value, the number of m0 shifts may be increased correspondingly. For example, $m_0 = c\ \left\lfloor \frac{N_{ID}^{(1)}}{a} \right\rfloor + d * N_{ID}^{(2)}$.

The constants a, b, c, d used in these examples may be selected so that a number of second SSS part shifts m1 does not exceed the second SSS part sequence length, that is, $a \le b$, $b * e \le 127$, where e is the number of $N_{ID}^{(2)}$ values, wherein e = 3 may be assumed and 127 is an example of the sequence length, which naturally may alternatively be different.

Constant $a$ should also be integer factor of $f$, the number of $N_{ID}^{(1)}$ values, for example f = 336 is a possible value. Further, $c * f/a \le 127$ (or another sequence length instead of 127) so that the number of first SSS part shifts m0 does not exceed the first SSS part sequence length. Further, $d * e \le c$ so that different combinations of values do not result in a same m0 shift. For example, the constants may be as follows: a = 28 and b = 28 or 37, c = 9 and d = 3.

In the first embodiment, first SSS part and second SSS part are dependent only via the PCI component $N_{\text{ID}}^{(2)}$, which has only 3 values. The dependence of the first and second SSS parts on $N_{\text{ID}}^{(1)}$ is formulated so that it does not create dependence between first SSS part and second SSS part.

In the second embodiment, first SSS part and second SSS part are made dependent also via identifier $N_{\text{ID}}^{(1)}$ in addition to the dependency on $N_{\text{ID}}^{(2)}$. This will reduce the probability that a first SSS part and a second SSS part from different cells are mistaken by a UE to be from the same cell, leading to reduced risk of confusion and delay in the synchronization process. Additionally, the cycle over which m0 and m1 return to same value may be increased. Shift values m0 and m1 are cyclic shift values.

As a numerical example, for e = 3, f = 336, and SSS1 and SSS2 sequence length of 127, we may use $m_0 = 9 \left\lfloor \frac{N_{ID}^{(1)}}{24} \right\rfloor + 3 * N_{ID}^{(1)} mod\ 3 + N_{ID}^{(2)}$ and $m_1 = N_{ID}^{(1)} mod\ 24 + 24 * N_{ID}^{(2)}$.

These alternatives are illustrated in FIGURE 2B. In FIGURE 2B, the detected first SSS part index, m0, is highlighted and candidate second SSS part indices, m1, that UE may assume to be from the same cell are likewise highlighted. When not restricting the second SSS part index, once the UE has detected PSS and the first SSS part, any second SSS part the UE detects with acceptable timing can be from the cell to which UE is synchronizing to, when the second SSS part has no dependence on the first SSS part. This is graphically indicated by the shading of all values of m1 in the "unrestricted" column of FIGURE 2B.

On the other hand in the first embodiment, only every third second SSS part (or PCI) can be from the same cell as the detected first SSS part. This is also indicated graphically by the shading of values in the m1 part of the "1st embodiment" column in FIGURE 2B. With the second embodiment, only every ninth second SSS part (or PCI) index can be from the same cell as the detected first SSS part, further reducing the risk of the UE using an incorrect second SSS part which originates from another cell.

In the example table below, the number of valid SSS, first SSS part and second SSS part candidates are described for the unrestricted solution as well as for the first ("1st emb.") and second ("2nd emb.") embodiments, with different assumptions of synchronization signals that UE has detected.

| | 5G | unrestricted | 1st emb. | 2nd emb. |
|---|---|---|---|---|
| Number of SSS candidates once PSS detected | 336 | | | |
| Number of SSS1 candidates once PSS detected | | 3 | 12 | 42 |

(continued)

|  | 5G | unrestricted | 1st emb. | 2nd emb. |
|---|---|---|---|---|
| Number of SSS2 candidates once PSS and SS1 detected |  | 112 | 28 | 8 |
| Number of SSS1 candidates if PSS and SSS2 detected |  | 3 | 12 | 14 |

Overall, a beneficial technical effect of the herein disclosed synchronization mechanisms is the provision of robust and reliable synchronization signal acquisition, reducing the risk of cell detection ambiguity by the UE when using an SSS partitioned into low-PAPR sequences, such as m-sequences, for example.

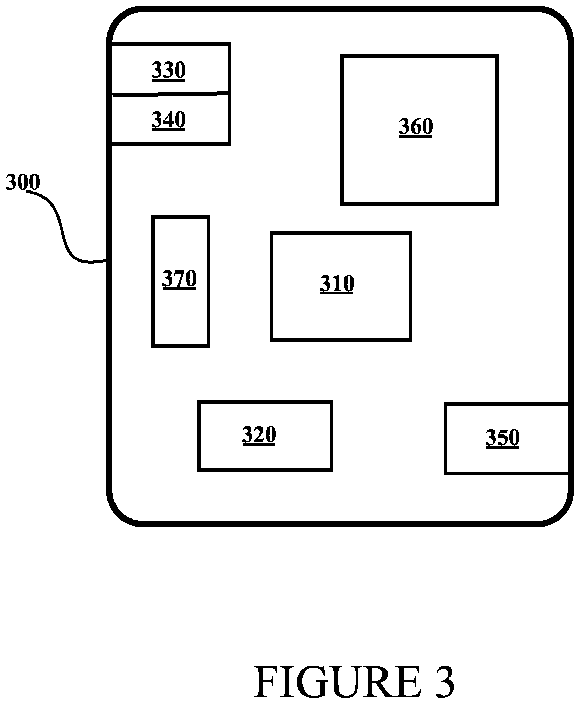

FIGURE 3 illustrates an example apparatus capable of supporting at least some embodiments of the present invention. Illustrated is device 300, which may comprise, for example, a mobile communication device such as UE 110 or, in applicable parts, base station 130 of FIGURE 1. Comprised in device 300 is processor 310, which may comprise, for example, a single- or multi-core processor wherein a single-core processor comprises one processing core and a multi-core processor comprises more than one processing core. Processor 310 may comprise, in general, a control device. Processor 310 may comprise more than one processor. When processor 310 comprises more than one processor, device 300 may be a distributed device wherein processing of tasks takes place in more than one physical unit. Processor 310 may be a control device. A processing core may comprise, for example, a Cortex-A8 processing core manufactured by ARM Holdings or a Zen processing core designed by Advanced Micro Devices Corporation. A processing core or processor may be, or may comprise, at least one qubit. Processor 310 may comprise at least one Qualcomm Snapdragon and/or Intel Atom processor. Processor 310 may comprise at least one application-specific integrated circuit, ASIC. Processor 310 may comprise at least one field-programmable gate array, FPGA. Processor 310, optionally together with memory and computer instructions, may be means for performing method steps in device 300, such as detecting, accepting, using, receiving, transmitting and selecting, for example. Processor 310 may be configured, at least in part by computer instructions, to perform actions.

A processor may comprise circuitry, or be constituted as circuitry or circuitries, the circuitry or circuitries being configured to perform phases of methods in accordance with embodiments described herein. As used in this application, the term "circuitry" may refer to one or more or all of the following: (a) hardware-only circuit implementations, such as implementations in only analogue and/or digital circuitry, and (b) combinations of hardware circuits and software, such as, as applicable: (i) a combination of analogue and/or digital hardware circuit(s) with software/firmware and (ii) any portions of hardware processor(s) with software (including digital signal processor(s)), software, and memory(ies) that work together to cause an apparatus, such as a mobile phone or base station, to perform various functions) and (c) hardware circuit(s) and or processor(s), such as a microprocessor(s) or a portion of a microprocessor(s), that requires software (e.g., firmware) for operation, but the software may not be present when it is not needed for operation.

This definition of circuitry applies to all uses of this term in this application, including in any claims. As a further example, as used in this application, the term circuitry also covers an implementation of merely a hardware circuit or processor (or multiple processors) or portion of a hardware circuit or processor and its (or their) accompanying software and/or firmware. The term circuitry also covers, for example and if applicable to the particular claim element, a baseband integrated circuit or processor integrated circuit for a mobile device or a similar integrated circuit in server, a cellular network device, or other computing or network device.

Device 300 may comprise memory 320. Memory 320 may comprise random-access memory and/or permanent memory. Memory 320 may comprise at least one RAM chip. Memory 320 may be a computer readable medium. Memory 320 may comprise solid-state, magnetic, optical and/or holographic memory, for example. Memory 320 may be at least in part accessible to processor 310. Memory 320 may be at least in part comprised in processor 310. Memory 320 may be means for storing information. Memory 320 may comprise computer instructions that processor 310 is configured to execute. When computer instructions configured to cause processor 310 to perform certain actions are stored in memory 320, and device 300 overall is configured to run under the direction of processor 310 using computer instructions from memory 320, processor 310 and/or its at least one processing core may be considered to be configured to perform said certain actions. Memory 320 may be at least in part external to device 300 but accessible to device 300. Memory 320 may be transitory or non-transitory. The term "non-transitory", as used herein, is a limitation of the medium itself (that is, tangible, not a signal) as opposed to a limitation on data storage persistency (for example, RAM vs. ROM).

Device 300 may comprise a transmitter 330. Device 300 may comprise a receiver 340. Transmitter 330 and receiver 340 may be configured to transmit and receive, respectively, information in accordance with at least one cellular or non-cellular standard. Transmitter 330 may comprise more than one transmitter. Receiver 340 may comprise more than one receiver. Transmitter 330 and/or receiver 340 may be configured to operate in accordance with global system for mobile communication, GSM, wideband code division multiple access, WCDMA, 5G, long term evolution, LTE, IS-95, wireless local area network, WLAN, Ethernet and/or worldwide interoperability for microwave access, WiMAX, standards, for example.

Device 300 may comprise a near-field communication, NFC, transceiver 350. NFC transceiver 350 may support at least one NFC technology, such as NFC, Bluetooth, Wibree or similar technologies.

Device 300 may comprise user interface, UI, 360. UI 360 may comprise at least one of a display, a keyboard, a touchscreen, a vibrator arranged to signal to a user by causing device 300 to vibrate, a speaker or a microphone. A user may be able to operate device 300 via UI 360, for example to accept incoming telephone calls, to originate telephone calls or video calls, to browse the Internet, to manage digital files stored in memory 320 or on a cloud accessible via transmitter 330 and receiver 340, or via NFC transceiver 350, and/or to play games.

Device 300 may comprise or be arranged to accept a user identity module 370. User identity module 370 may comprise, for example, a subscriber identity module, SIM, card installable in device 300. A user identity module 370 may comprise information identifying a subscription of a user of device 300. A user identity module 370 may comprise cryptographic information usable to verify the identity of a user of device 300 and/or to facilitate encryption of communicated information and billing of the user of device 300 for communication effected via device 300.

Processor 310 may be furnished with a transmitter arranged to output information from processor 310, via electrical leads internal to device 300, to other devices comprised in device 300. Such a transmitter may comprise a serial bus transmitter arranged to, for example, output information via at least one electrical lead to memory 320 for storage therein. Alternatively to a serial bus, the transmitter may comprise a parallel bus transmitter. Likewise processor 310 may comprise a receiver arranged to receive information in processor 310, via electrical leads internal to device 300, from other devices comprised in device 300. Such a receiver may comprise a serial bus receiver arranged to, for example, receive information via at least one electrical lead from receiver 340 for processing in processor 310. Alternatively to a serial bus, the receiver may comprise a parallel bus receiver.

Device 300 may comprise further devices not illustrated in FIGURE 3. For example, where device 300 comprises a smartphone, it may comprise at least one digital camera. Some devices 300 may comprise a back-facing camera and a front-facing camera, wherein the back-facing camera may be intended for digital photography and the front-facing camera for video telephony. Device 300 may comprise a fingerprint sensor arranged to authenticate, at least in part, a user of device 300. In some embodiments, device 300 lacks at least one device described above. For example, some devices 300 may lack a NFC transceiver 350 and/or user identity module 370.

Processor 310, memory 320, transmitter 330, receiver 340, NFC transceiver 350, UI 360 and/or user identity module 370 may be interconnected by electrical leads internal to device 300 in a multitude of different ways. For example, each of the aforementioned devices may be separately connected to a master bus internal to device 300, to allow for the devices to exchange information. However, as the skilled person will appreciate, this is only one example and depending on the embodiment various ways of interconnecting at least two of the aforementioned devices may be selected without departing from the scope of the present invention.

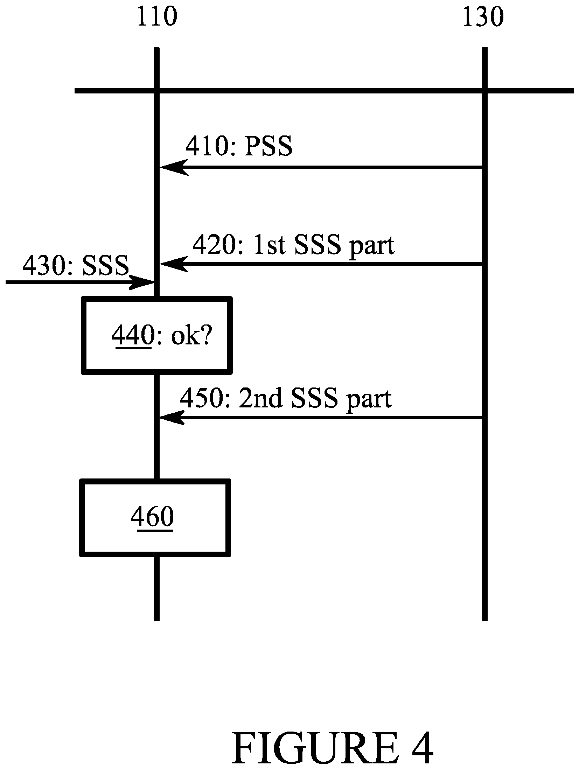

FIGURE 4 illustrates signalling in accordance with at least some embodiments of the present invention. On the vertical axes are disposed, on the left, UE 110 of FIGURE 1, and on the right, base station 130 likewise of FIGURE 1. Time advances from the top toward the bottom. The signalling of FIGURE 4 relates to synchronization with a cell controlled by base station 130.

In phase 410, base station 130 transmits the PSS, which the UE detects. Subsequently, in phase 420, base station 130 transmits, and the UE detects, the first SSS part as a low-PAPR sequence, such as, for example, an m-sequence.

After phase 420, in phase 430 the UE detects a spurious second SSS part from another nearby cell. In phase 440 the UE determines whether the index m1 of the second SSS part received in phase 430 satisfies a mapping function in accordance with the first or second embodiment described herein above. In this case, as the second SSS part of phase 430 is spurious and its index does not accidentally fall on one of the acceptable ones, UE 110 ignores the second SSS part of phase 430. In phase 450, base station 130 transmits, and the UE detects, the second SSS part as a low-PAPR sequence, such as, for example, an m-sequence.

Optionally, phase 440 may also comprise determining whether the second SSS part of phase 430 has been detected with timing the UE expects for a second SSS part from base station 130, and rejecting or ignoring the second SSS part of phase 430 responsive to determining that the timing does not match what the UE expects from a second SSS part from base station 130.

The UE determines, in phase 460, that the index of the second SSS part received in phase 450 satisfies the mapping function(s) of the first or second embodiment, and consequently the UE accepts the second SSS part of phase 450. In phase 460 UE 110 proceeds with the synchronization process, for example by searching for physical broadcast channel, PBCH, symbols the base station may provide.

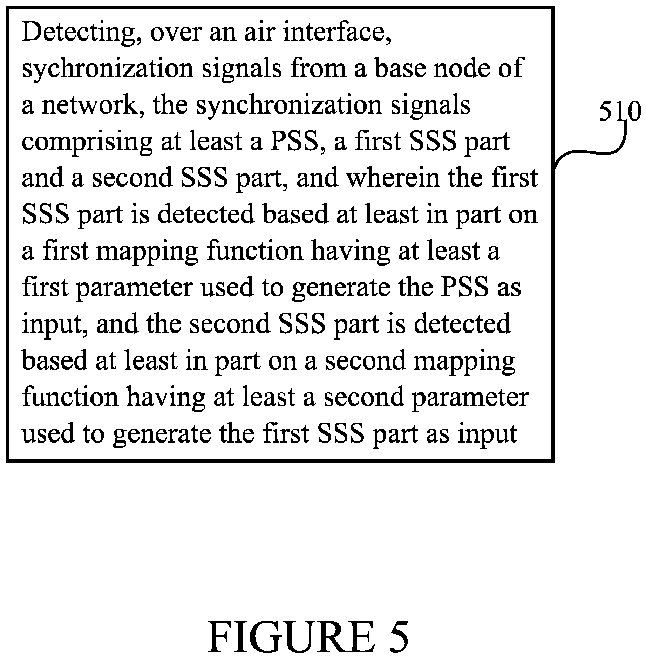

FIGURE 5 is a flow graph of a method in accordance with at least some embodiments of the present invention. The phases of the illustrated method may be performed in UE 110, for example, or in a control device configured to control the functioning thereof, when installed therein.

Phase 510 comprises detecting, over an air interface, synchronization signals from a base node of a network, the synchronization signals comprising at least a primary synchronization signal, PSS, a first secondary synchronization signal, SSS, part and a second SSS part, and wherein the first SSS part is detected based at least in part on a first mapping function having at least a first parameter used to generate the PSS as input, and the second SSS part is detected based at least in part on a second mapping function having at least a second parameter used to generate the first SSS part as input.

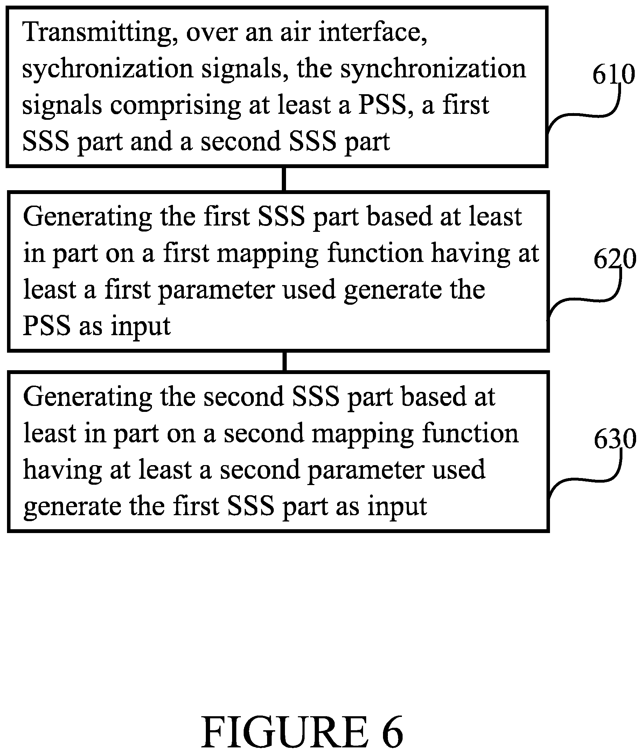

FIGURE 6 is a flow graph of a method in accordance with at least some embodiments of the present invention. The phases of the illustrated method may be performed in a base station, for example, or in a control device configured to control the functioning thereof, when installed therein.

Phase 610 comprises transmitting, over an air interface, synchronization signals, the synchronization signals comprising at least a primary synchronization signal, PSS, a secondary synchronization signal, SSS, first part and an SSS second part. Phase 620 comprises generating the first SSS part based at least in part on a first mapping function having at least a first parameter used to generate the PSS as input. Phase 630 comprises generating the second SSS part based at least in part on a second mapping function having at least a second parameter used to generate the first SSS part as input.

It is to be understood that the embodiments of the invention disclosed are not limited to the particular structures, process steps, or materials disclosed herein, but are extended to equivalents thereof as would be recognized by those ordinarily skilled in the relevant arts. It should also be understood that terminology employed herein is used for the purpose of describing particular embodiments only and is not intended to be limiting.

Reference throughout this specification to one embodiment or an embodiment means that a particular feature, structure, or characteristic described in connection with the embodiment is included in at least one embodiment of the present invention. Thus, appearances of the phrases "in one embodiment" or "in an embodiment" in various places throughout this specification are not necessarily all referring to the same embodiment. Where reference is made to a numerical value using a term such as, for example, about or substantially, the exact numerical value is also disclosed.

As used herein, a plurality of items, structural elements, compositional elements, and/or materials may be presented in a common list for convenience. However, these lists should be construed as though each member of the list is individually identified as a separate and unique member. Thus, no individual member of such list should be construed as a de facto equivalent of any other member of the same list solely based on their presentation in a common group without indications to the contrary. In addition, various embodiments and example of the present invention may be referred to herein along with alternatives for the various components thereof. It is understood that such embodiments, examples, and alternatives are not to be construed as de facto equivalents of one another, but are to be considered as separate and autonomous representations of the present invention.

Furthermore, the described features, structures, or characteristics may be combined in any suitable manner in one or more embodiments. In the preceding description, numerous specific details are provided, such as examples of lengths, widths, shapes, etc., to provide a thorough understanding of embodiments of the invention. One skilled in the relevant art will recognize, however, that the invention can be practiced without one or more of the specific details, or with other methods, components, materials, etc. In other instances, well-known structures, materials, or operations are not shown or described in detail to avoid obscuring aspects of the invention.

While the forgoing examples are illustrative of the principles of the present invention in one or more particular applications, it will be apparent to those of ordinary skill in the art that numerous modifications in form, usage and details of implementation can be made without the exercise of inventive faculty, and without departing from the principles and concepts of the invention. Accordingly, it is not intended that the invention be limited, except as by the claims set forth below.

The verbs "to comprise" and "to include" are used in this document as open limitations that neither exclude nor require the existence of also un-recited features. The features recited in depending claims are mutually freely combinable unless otherwise explicitly stated. Furthermore, it is to be understood that the use of "a" or "an", that is, a singular form, throughout this document does not exclude a plurality.

As used herein, "at least one of the following: <a list of two or more elements>" and "at least one of <a list of two or more elements>" and similar wording, where the list of two or more elements are joined by "and" or "or", mean at least any one of the elements, or at least any two or more of the elements, or at least all the elements.

INDUSTRIAL APPLICABILITY

At least some embodiments of the present invention find industrial application in wireless communication.

ACRONYMS LIST

| 5G | fifth generation, also known as new radio, NR |
| OFDM | orthogonal frequency domain multiplexing |
| PA | power amplifier |

PAPR     peak to average power ratio
PBCH     physical broadcast channel
PSS      primary synchronization signal
SSS      secondary synchronization signal
UE       user equipment

REFERENCE SIGNS LIST

| 110 | user equipment, UE |
|---|---|
| 130, 135 | base station |
| 130A, 130B, 135A, 135B | cells |
| 140 | core network node |
| 150 | network |
| 300 - 350 | structure of the device of FIGURE 3 |
| 410 - 450 | phases of signalling of FIGURE 4 |
| 510 | phase of the method of FIGURE 5 |

**Claims**

1.  An apparatus comprising at least one processing core and at least one memory storing instructions that, when executed by the at least one processing core, cause the apparatus at least to:

    - detect, over an air interface, synchronization signals from a base node of a network, the synchronization signals comprising at least a primary synchronization signal, PSS, a first secondary synchronization signal, SSS, part and a second SSS part,

    wherein the apparatus is further caused to:

    - detect the first SSS part based at least in part on a first mapping function having at least a first parameter used to generate the PSS as input; and
    - detect the second SSS part based at least in part on a second mapping function having at least a second parameter used to generate the first SSS part as input.

2.  The apparatus according to claim 1, wherein the second mapping function has at least the first parameter as further input.

3.  The apparatus according to claim 1 or 2, wherein the first SSS part is modulated with a first m-sequence having a first cyclic shift determined based on the first mapping function, and the second SSS part is modulated with a second m-sequence having a second cyclic shift determined based on the second mapping function.

4.  The apparatus according to claim 3, wherein a value of the second cyclic shift is selected from a subset of possible second cyclic shift values, and wherein the subset of possible second cyclic shift values is determined based on a value of the first cyclic shift.

5.  The apparatus according to any of claims 3 or 4, wherein at least one of:

    - the first cyclic shift satisfies the equation $m_0 = c \left\lfloor \frac{N_{ID}^{(1)}}{a} \right\rfloor + d * N_{ID}^{(2)}$ ;

- the first cyclic shift satisfies the equation $m_0 = c \left\lfloor \frac{N_{ID}^{(1)}}{a} \right\rfloor + e * N_{ID}^{(1)} \, mod \; e + N_{ID}^{(2)}$ ; or

- the second cyclic shift satisfies the equation $m_1 = N_{ID}^{(1)} \, mod \; a + b * N_{ID}^{(2)}$ ,

where $N_{ID}^{(2)}$ is a first identifier, $N_{ID}^{(1)}$ is a second identifier, and a, b, c, d, e are positive integer constants.

6. The apparatus according to claim 5, wherein the first and second identifiers are determined based on a physical cell identifier.

7. The apparatus according to any of claims 1 to 6, wherein the second mapping function takes an indication of a location in a slot where the apparatus detects the first SSS part as further input.

8. The apparatus according to any of claims 1 to 7, wherein the apparatus is configured to use at least the PSS to acquire time synchronization with the base node, and to use at least the first and second SSS parts to acquire frequency synchronization with the base node.

9. The apparatus according to any of claims 1 to 8, further caused to receive the first SSS part time multiplexed or frequency multiplexed with the second SSS part.

10. An apparatus comprising at least one processing core and at least one memory storing instructions that, when executed by the at least one processing core, cause the apparatus at least to:

    - transmit, over an air interface, synchronization signals, the synchronization signals comprising at least a primary synchronization signal, PSS, a secondary synchronization signal, SSS, first part and an SSS second part,

    wherein the apparatus is further caused to:

    - generate the first SSS part based at least in part on a first mapping function having at least a first parameter used to generate the PSS as input; and
    - generate the second SSS part based at least in part on a second mapping function having at least a second parameter used to generate the first SSS part as input.

11. The apparatus according to claim 10, wherein the second mapping function has at least the first parameter as further input.

12. The apparatus according to claim 10 or 11, wherein the first SSS part is modulated with a first m-sequence having a first cyclic shift determined based on the first mapping function, and the second SSS part is modulated with a second m-sequence having a second cyclic shift determined based on the second mapping function.

13. The apparatus according to claim 12, wherein the apparatus is further caused to select a value for the second cyclic shift from a subset of possible second cyclic shift values, wherein the subset of possible second cyclic shift values is determined based on a value of the first cyclic shift.

14. The apparatus according to any of claims 12 or 13, wherein at least one of:

- the first cyclic shift satisfies the equation $m_0 = c \left\lfloor \frac{N_{ID}^{(1)}}{a} \right\rfloor + d * N_{ID}^{(2)}$ ;

- the first cyclic shift satisfies the equation $m_0 = c \left\lfloor \frac{N_{ID}^{(1)}}{a} \right\rfloor + e * N_{ID}^{(1)} \, mod \; e + N_{ID}^{(2)}$ ; or

- the second cyclic shift satisfies the equation $m_1 = N_{ID}^{(1)} \, mod \; a + b * N_{ID}^{(2)}$ ,

where $N_{ID}^{(2)}$ is a first identifier, $N_{ID}^{(1)}$ is a second identifier, and a, b, c, d, e are positive integer constants.

15. The apparatus according to claim 14, wherein the first and second identifiers are determined based on a physical cell identifier.

16. The apparatus according to any of claims 10 to 15, wherein the second mapping function takes an indication of a location in a slot where the apparatus detects the first SSS part as further input.

17. The apparatus according to any of claims 10 to 16, further caused to transmit the first SSS part time multiplexed or frequency multiplexed with the second SSS part.

140

150

130

135

130B

130A

135A    135B

110

# FIGURE 1

| N(1)ID | m0 / N(2)ID | | | m1 |
|---|---|---|---|---|
| | 0 | 1 | 2 | |
| 0 | 0 | 5 | 10 | 0 |
| 1 | 0 | 5 | 10 | 1 |
| 2 | 0 | 5 | 10 | 2 |
| 3 | 0 | 5 | 10 | 3 |
| 4 | 0 | 5 | 10 | 4 |
| 5 | 0 | 5 | 10 | 5 |
| 6 | 0 | 5 | 10 | 6 |
| 7 | 0 | 5 | 10 | 7 |
| 8 | 0 | 5 | 10 | 8 |
| 9 | 0 | 5 | 10 | 9 |
| 10 | 0 | 5 | 10 | 10 |
| 11 | 0 | 5 | 10 | 11 |
| 12 | 0 | 5 | 10 | 12 |
| 13 | 0 | 5 | 10 | 13 |
| 14 | 0 | 5 | 10 | 14 |
| 15 | 0 | 5 | 10 | 15 |
| 16 | 0 | 5 | 10 | 16 |
| ... | ... | ... | ... | ... |
| 111 | 0 | 5 | 10 | 111 |

m0 can be mixed
with one of 112 m1s

# FIGURE 2A

| PCI | N1 | N2 | unrestricted m0 | m1 | 1st enbodiment m0 | m1 | 2nd embodiment m0 | m1 |
|---|---|---|---|---|---|---|---|---|
| 0 | 0 | 0 | 0 | 0 | 0 | 0 | 0 | 0 |
| 1 | 0 | 1 | 5 | 0 | 3 | 28 | 1 | 24 |
| 2 | 0 | 2 | 10 | 0 | 6 | 56 | 2 | 48 |
| 3 | 1 | 0 | 0 | 1 | 0 | 1 | 3 | 1 |
| 4 | 1 | 1 | 5 | 1 | 3 | 29 | 4 | 25 |
| 5 | 1 | 2 | 10 | 1 | 6 | 57 | 5 | 49 |
| 6 | 2 | 0 | 0 | 2 | 0 | 2 | 6 | 2 |
| 7 | 2 | 1 | 5 | 2 | 3 | 30 | 7 | 26 |
| 8 | 2 | 2 | 10 | 2 | 6 | 58 | 8 | 50 |
| 9 | 3 | 0 | 0 | 3 | 0 | 3 | 0 | 3 |
| 10 | 3 | 1 | 5 | 3 | 3 | 31 | 1 | 27 |
| 11 | 3 | 2 | 10 | 3 | 6 | 59 | 2 | 51 |
| 12 | 4 | 0 | 0 | 4 | 0 | 4 | 3 | 4 |
| 13 | 4 | 1 | 5 | 4 | 3 | 32 | 4 | 28 |
| 14 | 4 | 2 | 10 | 4 | 6 | 60 | 5 | 52 |
| 15 | 5 | 0 | 0 | 5 | 0 | 5 | 6 | 5 |

# FIGURE 2B

FIGURE 3

110                                130

410: PSS

420: 1st SSS part

430: SSS

440: ok?

450: 2nd SSS part

460

# FIGURE 4

Detecting, over an air interface, sychronization signals from a base node of a network, the synchronization signals comprising at least a PSS, a first SSS part and a second SSS part, and wherein the first SSS part is detected based at least in part on a first mapping function having at least a first parameter used to generate the PSS as input, and the second SSS part is detected based at least in part on a second mapping function having at least a second parameter used to generate the first SSS part as input

510

# FIGURE 5

Transmitting, over an air interface, sychronization signals, the synchronization signals comprising at least a PSS, a first SSS part and a second SSS part — 610

Generating the first SSS part based at least in part on a first mapping function having at least a first parameter used generate the PSS as input — 620

Generating the second SSS part based at least in part on a second mapping function having at least a second parameter used generate the first SSS part as input — 630

# FIGURE 6

Europäisches
Patentamt
European
Patent Office
Office européen
des brevets

# EUROPEAN SEARCH REPORT

**Application Number**

EP 23 21 8083

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 3 639 419 A1 (MOTOROLA MOBILITY LLC [US]) 22 April 2020 (2020-04-22) | 1-6, 10-15 | INV. H04J11/00 |
| Y | * pages 9-13; figure 6 * | 7-9,16, 17 | H04J13/00 |
| | ----- | | |
| X | EP 3 583 711 A1 (LG ELECTRONICS INC [KR]) 25 December 2019 (2019-12-25) | 1-6, 10-15 | |
| Y | * page 13 - page 14; figure 14 * | 7-9,16, 17 | |
| | ----- | | |
| X | EP 3 905 557 A1 (HUAWEI TECH CO LTD [CN]) 3 November 2021 (2021-11-03) | 1-6, 10-15 | |
| Y | * page 21; figure 5 * | 7-9,16, 17 | |
| | ----- | | |
| Y | WO 2016/204883 A1 (QUALCOMM INC [US]) 22 December 2016 (2016-12-22) * paragraph [0031] - paragraph [0035] * | 7-9,16, 17 | |
| | ----- | | |
| A | HUAWEI ET AL: "Evaluation of NR-SS", 3GPP DRAFT; R1-1711860, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG1, no. Qingdao, China; 20170627 - 20170630 29 June 2017 (2017-06-29), XP051306050, Retrieved from the Internet: URL:http://www.3gpp.org/ftp/tsg_ran/WG1_RL1/TSGR1_AH/NR_AH_1706/Docs/ [retrieved on 2017-06-29] * page 1 * | 1-17 | **TECHNICAL FIELDS SEARCHED (IPC)** H04J |
| | ----- | | |

The present search report has been drawn up for all claims

| Place of search | Date of completion of the search | Examiner |
|---|---|---|
| Munich | 28 May 2024 | Giglietto, Massimo |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**ANNEX TO THE EUROPEAN SEARCH REPORT
ON EUROPEAN PATENT APPLICATION NO.**

EP 23 21 8083

This annex lists the patent family members relating to the patent documents cited in the above-mentioned European search report.
The members are as contained in the European Patent Office EDP file on
The European Patent Office is in no way liable for these particulars which are merely given for the purpose of information.

28-05-2024

| Patent document cited in search report | | Publication date | Patent family member(s) | | Publication date |
|---|---|---|---|---|---|
| EP 3639419 | A1 | 22-04-2020 | CN | 110663204 A | 07-01-2020 |
| | | | CN | 115102661 A | 23-09-2022 |
| | | | CN | 115102662 A | 23-09-2022 |
| | | | EP | 3639419 A1 | 22-04-2020 |
| | | | KR | 20200015550 A | 12-02-2020 |
| | | | US | 2018368087 A1 | 20-12-2018 |
| | | | US | 2020213962 A1 | 02-07-2020 |
| | | | US | 2022182952 A1 | 09-06-2022 |
| | | | WO | 2018232373 A1 | 20-12-2018 |
| EP 3583711 | A1 | 25-12-2019 | AU | 2018232645 A1 | 07-02-2019 |
| | | | BR | 112019008950 A2 | 09-07-2019 |
| | | | CA | 3031674 A1 | 13-09-2018 |
| | | | CL | 2019000134 A1 | 22-04-2019 |
| | | | CN | 110352571 A | 18-10-2019 |
| | | | EP | 3583711 A1 | 25-12-2019 |
| | | | JP | 6750131 B2 | 02-09-2020 |
| | | | JP | 2020504991 A | 13-02-2020 |
| | | | KR | 20180111980 A | 11-10-2018 |
| | | | MY | 194361 A | 29-11-2022 |
| | | | PH | 12019500623 A1 | 11-11-2019 |
| | | | RU | 2719354 C1 | 17-04-2020 |
| | | | SG | 11201900436U A | 27-02-2019 |
| | | | US | 2021091872 A1 | 25-03-2021 |
| | | | WO | 2018164414 A1 | 13-09-2018 |
| EP 3905557 | A1 | 03-11-2021 | AU | 2017412833 A1 | 12-12-2019 |
| | | | BR | 112019022907 A2 | 26-05-2020 |
| | | | BR | 112019022995 A2 | 19-05-2020 |
| | | | CA | 3063202 A1 | 08-11-2018 |
| | | | CN | 109845148 A | 04-06-2019 |
| | | | CN | 110324891 A | 11-10-2019 |
| | | | CN | 110603754 A | 20-12-2019 |
| | | | CN | 112055406 A | 08-12-2020 |
| | | | CN | 118041483 A | 14-05-2024 |
| | | | EP | 3552328 A1 | 16-10-2019 |
| | | | EP | 3905557 A1 | 03-11-2021 |
| | | | JP | 7009506 B2 | 25-01-2022 |
| | | | JP | 7354311 B2 | 02-10-2023 |
| | | | JP | 2020519141 A | 25-06-2020 |
| | | | JP | 2022051749 A | 01-04-2022 |
| | | | JP | 2023175839 A | 12-12-2023 |
| | | | MY | 195602 A | 02-02-2023 |
| | | | PE | 20200276 A1 | 04-02-2020 |
| | | | RU | 2741997 C1 | 01-02-2021 |
| | | | US | 2019140689 A1 | 09-05-2019 |

EPO FORM P0459

For more details about this annex : see Official Journal of the European Patent Office, No. 12/82

page 1 of 2

## ANNEX TO THE EUROPEAN SEARCH REPORT
## ON EUROPEAN PATENT APPLICATION NO.

EP 23 21 8083

This annex lists the patent family members relating to the patent documents cited in the above-mentioned European search report.
The members are as contained in the European Patent Office EDP file on
The European Patent Office is in no way liable for these particulars which are merely given for the purpose of information.

28-05-2024

| Patent document cited in search report | Publication date | Patent family member(s) | Publication date |
|---|---|---|---|
| | | US  2019334575 A1 | 31-10-2019 |
| | | US  2020343936 A1 | 29-10-2020 |
| | | US  2024171212 A1 | 23-05-2024 |
| | | WO  2018202306 A1 | 08-11-2018 |
| | | WO  2018202319 A1 | 08-11-2018 |
| WO 2016204883    A1 | 22-12-2016 | CN   107771407 A | 06-03-2018 |
| | | US  2016374034 A1 | 22-12-2016 |
| | | WO  2016204883 A1 | 22-12-2016 |

EPO FORM P0459

For more details about this annex : see Official Journal of the European Patent Office, No. 12/82

page 2 of 2